# EUROPEAN PATENT SPECIFICATION

(11) **EP 1 534 558 B1**
(45) Date of publication and mention of the grant of the patent: **21.02.2007**
(21) Application number: 03784402.4
(22) Date of filing: 06.08.2003
(51) Int. Cl.: B60R 9/06

(54) **LOAD CARRIER FOR VEHICLES**
LASTTRÄGER FÜR FAHRZEUGE
PORTE-BAGAGES D'AUTOMOBILE

(30) Priority: 09.08.2002 IT MO20020231
(43) Date of publication of application: 01.06.2005
(73) Proprietor: F.LLI MENABO' S.R.L., 42025 Cavriago (IT)
(72) Inventor: MENABO', Domenico, I-42029 San Maurizio (IT)
(74) Representative: Crugnola, Pietro
(86) International application number: PCT/IB2003/003535
(87) International publication number: WO 2004/014698

(56) References cited:
- WO-A-03/072396
- FR-A- 2 668 435
- US-A- 3 710 999
- US-A- 3 927 811
- US-A- 4 336 897
- US-A- 4 709 840
- US-A- 5 435 472

## Description

The invention relates to a luggage carrier for vehicles, i. e. a device suitable for receiving loads, preferably applicable to the rear portion of said vehicles at a door or a boot cowling, provided with an adjusting system that enables said luggage carrier to conform to vehicles with different sizes and shapes.

The rear luggage carriers a vailable at present substantially differ one from the other on the basis of the technical solutions chosen for adapting a same luggage carrier to the plurality of shapes and size s of the attachment regions of the vehicles generally available on the market.

WO 00/76809 suggests a luggage carrier comprising frame sections mutually connected by means of telescopic tubes; in this case, a variation of the length of the luggage carrier is obtained making the portions of the frame to telescopically slide one into the other, this enables to engage hook portions of opposed ends of each section with corresponding edge portions of the vehicle hatchback. In the mounting and dismounting phases, the user is requested to apply a certain force for causing the sections to mutually slide as well as for blocking said sections in the desired position by means of a lever closing device, that results in a clear disadvantage.

A so structured device has short handling in use as well as a substantial complexity in fabrication due to the necessity to provide components (telescopic elements of the frame, closing lever) that increase fabrication time and fabrication costs.

Are also known luggage carrier for vehicle described for example in US 5056699, US 6345748 e US 6286738, that are provided with a frame comprising a first part of frame and a second part of frame that are hinged one into the other.

The first part of the frame below ends with a couple of supporting elements arranged for being positioned on the rear of the vehicle bumper or on the lower edge of the rear vehicle hatchback, thus actually impeding the opening of the vehicle hatchback after the luggage carrier has been mounted.

In an intermediate section of the second part of frame is further hinged a resting clamp for resting on the.rear window of the vehicle, or on the bonnet of the rear boot.

Elements for supporting a load, for example a bicycle, are hinged at the top of the second part of frame.

For fixing the luggage carrier to the vehicle it is necessary to anchor luggage carrier by means of a plurality of belts that have to be appropriately stretched one by one by the operator.

Before stretching the belts, it is necessary to articulate, by acting on the hinges arranged between the first and the second part and between the latter and the resting bracket, the relative parts of frame so as the resting elements and the resting bracket are correctly positioned on the parts of vehicle.

Furthermore, it is necessary, still manually acting, to intervene on the hinges interposed between the second part of frame and the load supporting elements (forming, for example, a rack) so as to carry the latter in a position substantially suitable to receive the load.

Fixing the luggage carrier is particularly laborious, because it is necessary to act to position and stretch individually the numerous belts, and this implies a remarkable time and energies loss.

At end, a further efforts is requested to assure a secure locking of the rack in a position suitable for receiving the load, because the operator has to manually act on the locking devices provided in the known luggage carriers.

The luggage carriers of this kind, are furthermore constructionally complex, because it is necessary to arrange numerous components to obtain first and second parts of frame, elements for receiving the load, as well as devices for blocking the latter in the use position.

US 3927811 discloses a collapsible carrier for bicycles, luggage and the like, including two substantially U-shaped members pivotally connected. The carrier is provided with latching slide means that enable the two members to be maintained at right angles when in use or, alternatively, to be folded for storage and transport. In order to mount the carrier to a vehicle, attaching straps are provided that are fastened to the two members and that have to be individually and manually stretched, which results fatiguing and time-wasting for an user.

An object of the present invention is to improve the luggage carriers for vehicles.

A further object is to provide the user with a luggage carrier that can be easily mounted and dismounted from a vehicle.

Another object is to provide a luggage carrier provided with an actuating device for anchoring on and dismounting from a vehicle that is easy to be reached.

A further other object is to simplify the manual operation required to the user during the phase of fitting the luggage carrier on the sizes and shapes of the vehicle whereon it is mounted.

A still further object is to reduce the number of components forming of the luggage carrier, thus reducing time and costs of production.

The invention provides an apparatus for transporting loads as defined in Claim 1.

The anchoring means comprises hooking elements suitable to wound a significant edge portion of said part of vehicle.

The fixing means are preferably interposed between the anchoring means and the first frame body means. Still preferably, the fixing means can be obtained by using connecting members, flexible or not flexible - such strap, pierced strap (in particular metallic) - tie-rod, preferably of the screw type, toothed belts.

The connecting members can be coupled to stretching devices known in se, such: ratchets, windlass, stretchers, and similar.

After the opening angle comprised between first and second frame body means has been manually regulated so as to fit the shape of the vehicle part on which the device has to mounted, and after the first and second frame body means has been blocked in their mutual position that define such angle, it is possible to act on the afore-said fixing means for stretching the same, and thus assuring a stable positioning of the apparatus on the vehicle.

In this way, it is possible to mount in a safe manner the luggage carrier on a plurality of vehicles provided with different shapes and dimensions by simply acting on the fixing means, that are moreover arranged in a position easy to be reached.

From this follows that the manual intervention requested to the user is substantially facilitated in relation to what happen in other models of known luggage carriers.

Advantageously the load supporting means can be obtained so as to form a single body with the frame body means.

In this way, when the frame means are positioned on the vehicle, the here above said supporting means is itself arranged in a suitable load receiving position and it has not to be further regulated by the user.

This enables to further limit the manual intervention requested to the user for arranging the luggage carrier to be used.

Furthermore, the number of parts necessary for assembling the luggage carrier is reduced.

The invention can be better understood with reference to the enclosed drawings, that illustrate some exemplifying and not restrictive embodiment forms thereof, in which:
Figure 1 is a perspective view of a luggage carrier; in the version using fixing means comprising pierced straps, mounted on the rear door of a vehicle;
Figure 2 is a side view of the luggage carrier in Figure 1, showing with continuous line the luggage carrier when the mounting have been finished, and with dashed line the same luggage carrier during mounting;
Figure 3 is an enlarged view of the fixing means shown in Figures 1 and 2;
Figure 4 is a perspective view of further version of a luggage carrier.

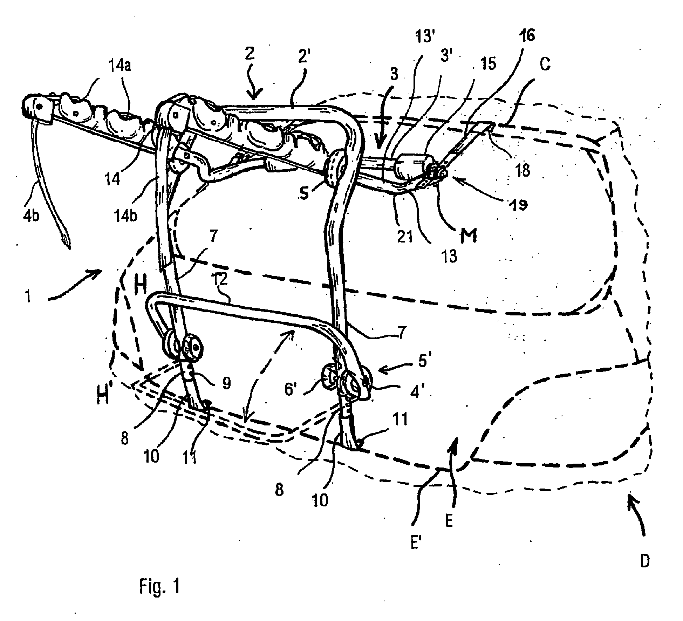

The Figure 1 shows a luggage carrier 1 mounted at the rear end of a vehicle D, represented by dashed line, and comprising a frame body 2 and a further frame body 3. The frame body 2 comprises a U-shaped portion 2', whose two ends extend over two arms 7, each one of which is provided with an extractable portion 8, provided with through holes 9; once the luggage carrier 1 has been assembled, the U-shaped portion 2' shows the arms 7 turned downwards; between the U-shaped portion 2' and the arms 7 there is defined an obtuse angle G, not shown.

The U-shaped portion 2' contains, near each one of its parallel sides, a slip joint 5 comprising a pair of discs frontally toothed reciprocally seizing up.

The slip joint 5 is interposed between the frame body 2 and the further frame body 3, and enables to articulate the two afore-said frame bodies as well as to blocking in preset reciprocal angular position.

The extractable portion 8 can be received for a longer or shorter portion of its length into the arm 7 and can be fixed in the preset position by means of a bolt, not shown, suitable for being positioned at one of the through holes 9. Thus, the length of any arm 7 can be changed and in particular can be made suitable for being mounted on vehicle portions that, due to their extend, would be otherwise unreachable.

The extractable portion 8 further comprises an anchoring appendage 10, terminating with a curved end 11 suitable for hooking with a bottom edge E' of the rear door E or a of bonnet boot, not shown, of a vehicle D.

Near the ends of the arms 7 adjacent to the rear bumper, not shown, of the vehicle D, there is placed a C-shaped element 12, arranged so as to have its longer rectilinear portion facing in the opposed direction with respect to the rear door E. The C-shaped element 12 engages with each of the arms 7 by means of a further hinge 5', provided with a clutch 4', the latter comprising a knob 6. The knob 6 enables to reciprocally tighten the two discs of the clutch 4', so blocking the hinge 5' in the requested position. The hinge 5' enables the C-shaped element 12 to be moved from a retracted position H to an extended position H', represented by dashed line. That enables to prevent that a particularly voluminous object mounted on the luggage carrier, for example a bicycle, can accidentally hit and then damage the surface of the rear door E or of the rear bumper, not shown, of the vehicle D.

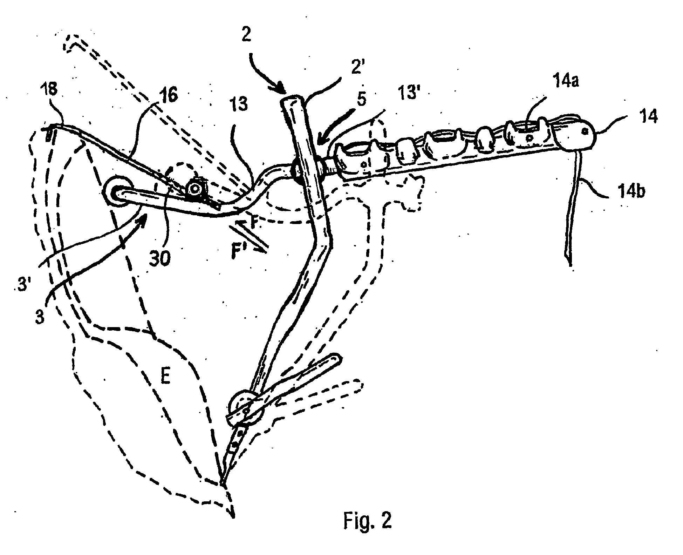

The further frame body 3, as depicted in the Figures 1 to 3, has a further U-shaped portion 3', whose two ends extend, by means of two curved sections 13, over two brackets 13'; each of the brackets 13' defines with the U-shaped portion 3' a further obtuse angle G', not shown. Each of the brackets 13' further contains a set of grooves 14a, suitable for being advantageously used as rack 14 whereon bicycles, having frame provided with central crossbar, can be received. With the rack 14 there is associated a tightening tape 14b suitable for holding in position the frame crossbar, received in every groove 14a.

The slip joints 5 are arranged at the intersection between the two portions of the further frame body 3 comprised between the two curved sections 13 and the two racks 14.

The further frame body 3 receives in its further U-shaped portion 3' at least a resting element 15, preferably in form of resilient cylinder having smooth surface; by means of the resting element 15 the further frame body 3 can be applied on the rear door E without damaging the external surface of the latter.

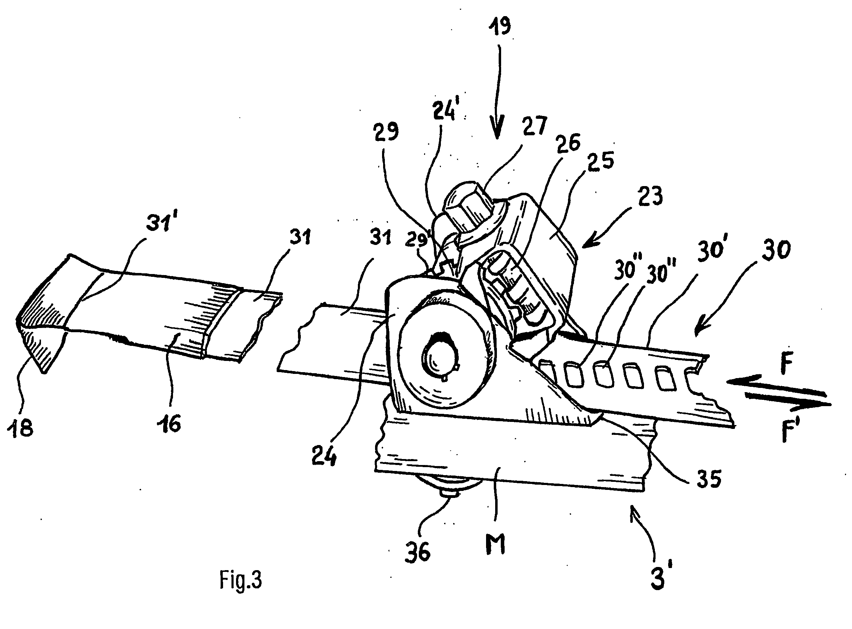

On each on of the two ends of the further U-shaped portion 3' of the further frame body 3 is arranged, in proximity of a median segment M, a fixing group 19 (depicted in detail in Figure 3) defining fixing means. Each fixing group 19 comprises dragging means 23 received in seat means 34, being the afore-said seat means 34 delimited by a couple of sidewalls 24, 24' that have convex outline and whose relative bases are integral with an intermediate plate 35. The intermediate plate 35 is made integral with the median segment M by means of a washer bolt 36. The dragging means 23 comprises in turn a shell 25, with an approximately C-shaped section, that is made integral with the couple of sidewalls 24, 24' by means of a plurality of protruding elements 25'.

The shell 25 internally receives an operating screw 26, vertically oriented and provided at its end opposed to the median plate 35 with a nut 27. The operating screw 26 engages with a toothed wheel 29 supported by the sidewalls 24, 24' and provided with tooth 29' engaged in equidistant holes 30'' obtained in a pierced portion 30' of a strap 30 that is interposed between the toothed wheel 29 of the dragging means 23 and the further frame body 3'.

The strap 30 comprises a pierced portion 30' and a unpierced portion 31 partially covered by an anti-abrasive sheathing 16. The free end 31' of the unpierced portion 31 is integral with a curved plate 18, suitable to hook to a upper edge C of the rear door E or of a bonnet boot, not shown, of a vehicle D.

By acting on the nut 27, it is possible to rotate the operating screw 26 about its axis, and in this way to operate the toothed wheel 29. The tooth 29' of the toothed wheel 29 then engages in sequence in a plurality of holes 30'' contained in the pierced portion 30' of the strap 30, thus making the same strap 30 to slide. The sliding direction of the pierced strap 30 is determined by the rotation direction given to the operating screw 26 by means of the nut 27.

By rotating the nut 27 in a direction, the strap 30 is moved along a direction F away from the curved plate 18 and then stretched, this enables to firmly anchor the curved plate 18 to the bodywork of the vehicle D and to firmly maintain the luggage carrier 1 in a position suitable to be used.

Naturally, by rotating the nut 27 in an opposite direction, the pierced strap 30 is moved in a direction F oriented towards the curved plate 18. In this way, the strap 30 is loosen, this enables the curved plate 18 to be unhooked from the upper edge C of the rear door E or of a bonnet boot, not shown, of a vehicle D and to subsequently to remove the luggage carrier 1.

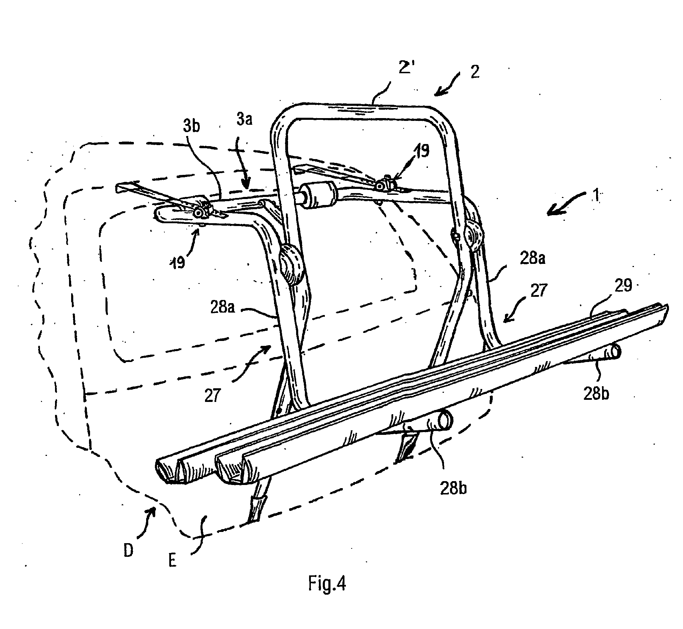

With reference to Figure 4, a preferred version of the luggage carrier 1 is provided, in which the further frame body 3a comprises, instead of the brackets 14, another further U-shaped portion 3b extending, at both the ends, over an L-shaped loading element 27. Each one of the L-shaped loading elements 27 comprises a vertical bar 28a and a horizontal bar 28b, mutually connected at right angle. Each one of the vertical rod 28a engages with the frame body 2 by means of the slip joint 5 previously described. The two horizontal bars 28b receive a pair of profiled elements 29, orthogonally arranged with respect to said horizontal bars 28b and having a roughly C-shaped section.

With such advantageous version of the luggage carrier 1 can be transported bicycles also having a frame unprovided with central crossbar, such as for example the ladies' bicycles.

## Claims

1. Apparatus for transporting loads, suitable for being mounted on a vehicle (D), comprising first frame body means (2) and second frame body means (3), that are mutually coupled by hinge means (5) and are arranged for being associated with opposite edges (C, E') of a door (E) of said vehicle (D) by anchoring means (10, 11, 16, 18, 30), said anchoring means (10, 11, 16, 18, 30) comprising strap means (30), load supporting means (14) associated with said first and/or second frame body means (2, 3), **characterised in that**, fixing means (19) is mounted on said frame body means (2, 3) and is provided with dragging means (23) interacting with said strap means (30), so that by acting on said dragging means (23) said strap means (30) can be alternately moved away from, or towards, an intended anchoring zone (C) of said opposite edges (C, E').

2. Apparatus according to claim 1, wherein said load supporting means (14) forms a single body with said first and/or second frame body means (2, 3).

3. Apparatus according to claim 2, wherein said load supporting means (14) are obtained on prolongations of said second frame body means (3) farther on said hinge means (5).

4. Apparatus according to any preceding claim, wherein said first frame body means (2) comprises a portion (2') U-shaped.

5. Apparatus according to claim 4, wherein said U-shaped portion (2') extends on arm means (7).

6. Apparatus according to claim 5, wherein said U-shaped portion (2') and said arm means (7) are so arranged to define an obtuse angle (G).

7. Apparatus according to claim 5, or 6, wherein said arm means (7) finishes with extremity appendage anchoring means (10).

8. Apparatus according to any one of claims 5 to 7, wherein said arm means (7) comprises telescopic portion means (8).

9. Apparatus according to any one of claims 5 to 8, wherein said arm means (7) supports in adjustable manner end portion of load distancing means (12) C-shaped.

10. Apparatus, according to any preceding claim, wherein said second frame body means (3) comprises a further portion (3') U-shaped.

11. Apparatus according to claim 10, wherein said further portion (3') U-shaped comprises resting means (25) in shock resistant material.

12. Apparatus according to any preceding claim, wherein said ..load supporting means (14) comprises brackets means (13') arranged on the prolongation of said further portion (3') U-shaped.

13. Apparatus according to claim 12, wherein said brackets means (13') and said further portion (3') U-shaped.are so arranged to form a further obtuse angle (G).

14. Apparatus according to claim 12, or 13, wherein said brackets means (13') receive rack means (14).

15. Apparatus according to any one of claims 12 to 14, wherein said brackets means (13') extends on load means. (27) L-shaped, comprising a vertical bar means (28a) and a horizontal bar means (28b), angularly reciprocally connected.

16. Apparatus according to claim 15, wherein said horizontal bar means (28b) receives profiled elements (29), transversally arranged in relation to said horizontal bar means (28b).

17. Apparatus according to any preceding claim, wherein said fixing means (19) are interposed between said anchoring means (16) and said second frame body means (3).

18. Apparatus according to any preceding claim, wherein said fixing means (19) are selected among a group comprising: flexible connecting members, non-flexible connecting members, straps, screw: tie-rod, windlass, ratchets, toothed straps.

19. Apparatus according to any preceding claim, wherein said fixing means (19) comprises a straps (30) provided with holes (30'') in Which engage tooth (29') of a toothed wheel (29) that can be rotated by means of an operating screw (26).

20. Apparatus according to any one of claims 12 to 19, wherein a curved portion (13) is comprised between said bracket means (13') and each end of said further U-shaped portion (3').

## Patentansprüche

1. Vorrichtung zum Transportieren von Lasten, die zur Befestigung an einem Fahrzeug (D) geeignet ist, mit ersten Rahmenkörpermitteln (2) und zweiten Rahmenkörpermitteln (3), die über Gelenkmittel (5) miteinander gekoppelt sind und die ausgebildet sind, um über Ankermittel (10, 11, 16, 18, 30) mit einander gegenüberliegenden Kanten (C, E') einer Tür (E) des Fahrzeugs (D) verbunden zu werden, wobei die Ankermittel (10, 11, 16, 18, 30) Riemenmittel (30) aufweisen, und mit Lasttragemitteln (14), die mit den ersten und/oder zweiten Rahmenkörpermitteln (2, 3) verbunden sind, **dadurch gekennzeichnet, dass** an den Rahmenkörpermitteln (2, 3) Befestigungsmittel (19) angeordnet sind, die mit einem Wirkglied (23) versehen sind, das mit den Riemenmitteln (30) zusammenwirkt, so dass die Riemenmittel (30) durch eine Betätigung an dem Wirkglied (23) alternativ in eine oder aus einer vorgesehenen Ankerzone (C) der gegenüberliegenden Kanten (C, E') bewegt werden können.

2. Vorrichtung nach Anspruch 1, wobei die Lasttragemittel (14) mit den ersten und/oder zweiten Rahmenkörpermitteln (2, 3) einen einzigen Körper bilden.

3. Vorrichtung nach Anspruch 2, wobei die Lasttragemittel (14) auf Verlängerungen der zweiten Rahmenkörpermittel (3) über die Gelenkmittel (5) hinaus angeordnet sind.

4. Vorrichtung nach einem der vorhergehenden Ansprüche, wobei die ersten Rahmenkörpermittel (2) einen U-förmigen Abschnitt (2') aufweisen.

5. Vorrichtung nach Anspruch 4, wobei sich der U-förmige Abschnitt (2') auf Armmittel (7) erstreckt.

6. Vorrichtung nach Anspruch 5, wobei der U-förmige Abschnitt (2') und die Armmittel (7) so angeordnet sind, dass sie einen stumpfen Winkel (G) festlegen.

7. Vorrichtung nach Anspruch 5 oder 6, wobei die Armmittel (7) mit an den Enden aufgesetzten Ankermitteln (10) auslaufen.

8. Vorrichtung nach einem der Ansprüche 5 bis 7, wobei die Armmittel (7) teleskopartige Abschnittsteile (8) aufweisen.

9. Vorrichtung nach einem der Ansprüche 5 bis 8, wobei die Armmittel (7) Endabschnitte von C-förmigen Lastdistanzhaltemitteln (12) in einer einstellbaren Art und Weise tragen.

10. Vorrichtung nach einem der vorhergehenden Ansprüche, wobei die zweiten Rahmenkörpermittel (3) einen weiteren U-förmigen Abschnitt (3') aufweisen.

11. Vorrichtung nach Anspruch 10, wobei der weitere U-förmige Abschnitt (3') Stützmittel (25) aus einem stoßfesten Material aufweist.

12. Vorrichtung nach einem der vorhergehenden Ansprüche, wobei die Lasttragemittel (14) Kragarmmittel (13') beinhalten, die an der Verlängerung des weiteren U-förmigen Abschnitts (3') angeordnet sind.

13. Vorrichtung nach Anspruch 12, wobei die Kragarmmittel (13') und der weitere U-förmige Abschnitt (3') so ausgebildet sind, dass sie einen weiteren stumpfen Winkel (G) bilden.

14. Vorrichtung nach Anspruch 12 oder 13, wobei die Kragarmmittel (13') Aufhängemittel (14) aufnehmen.

15. Vorrichtung nach einem der Ansprüche 12 bis 14, wobei sich die Kragarmmittel (13') auf L-förmigen Lastmitteln (27) erstrecken, die ein vertikales Stangenmittel (28a) und ein horizontales Stangenmittel (28b) aufweisen, die unter einem Winkel miteinander verbunden sind.

16. Vorrichtung nach Anspruch 15, wobei das horizontale Stangenmittel (28b) profilierte Elemente (29) aufnimmt, die in Bezug auf das horizontale Stangenmittel (28b) quer angeordnet sind.

17. Vorrichtung nach einem der vorhergehenden Ansprüche, wobei die Haltemittel (19) zwischen den Ankermitteln (16) und den zweiten Rahmenkörpermitteln (3) angeordnet sind.

18. Vorrichtung nach einem der vorhergehenden Ansprüche, wobei die Haltemittel (19) aus einer Gruppe ausgewählt sind, die Folgendes beinhaltet: flexible Verbindungsglieder, nichtflexible Verbindungsglieder, Riemen, schraubbare Zugstreben, Winden, Ratschen, Zahnriemen.

19. Vorrichtung nach einem der vorhergehenden Ansprüche, wobei die Haltemittel (19) Riemen (30) aufweisen, die mit Löchern (39'') versehen sind, in die Zähne (29') eines Zahnrades (29) eingreifen, das mit Hilfe einer Bedienschraube (26) gedreht werden kann.

20. Vorrichtung nach einem der Ansprüche 12 bis 19, wobei zwischen den Kragarmmitteln (13') und jedem der weiteren U-förmigen Abschnitte (3') ein gekrümmter Abschnitt (13) angeordnet ist.

## Revendications

1. Dispositif pour le transport de charges, adapté à un montage sur un véhicule (D), comprenant des premiers moyens (2) de corps de cadre et des deuxièmes moyens (3) de corps de cadre qui sont mutuellement accouplés par des moyens de charnière (5) et sont agencés pour être associés à des bords opposés (C, E') d'une porte (hayon) (E) dudit véhicule (D) par des moyens d'ancrage (10, 11, 16, 18, 30), lesdits moyens d'ancrage (10, 11, 16, 18, 30) comprenant des moyens de sangle (30), des moyens (14) de support de charge associés auxdits premiers et/ou deuxièmes moyens (2, 3) de corps de cadre, ***caractérisé en ce qu'**un* moyen de fixation (19) est monté sur lesdits moyens (2, 3) de corps de cadre et est muni d'un élément actif (23) interagissant avec lesdits moyens de sangle (30), de telle sorte qu'en agissant sur ledit membre actif (23), lesdits moyens de sangle (30) peuvent être alternativement écartés ou approchés d'une zone d'ancrage (C) projetée desdits bords opposés (C, E').

2. Dispositif selon la revendication 1, dans lequel lesdits moyens (14) de support de charge forment un corps unique avec lesdits premiers et/ou deuxièmes moyens (2, 3) de corps de cadre.

3. Dispositif selon la revendication 2, dans lequel lesdits moyens (14) de support de charge sont obtenus sur des prolongations desdits deuxièmes moyens (3) de corps de cadre plus loin sur lesdits moyens de charnière (5).

4. Dispositif selon l'une quelconque des revendications précédentes, dans lequel lesdits premiers moyens (2) de corps de cadre comprennent une portion (2') en forme de U.

5. Dispositif selon la revendication 4, dans lequel ladite portion (2') en U s'étend sur des moyens de bras (7).

6. Dispositif selon la revendication 5, dans lequel ladite portion (2') en U et lesdits moyens de bras (7) sont agencés de manière à définir un angle obtus (G).

7. Dispositif selon la revendication 5 ou 6, dans lequel lesdits moyens de bras (7) se terminent avec des moyens d'ancrage (10) en appendice d'extrémité.

8. Dispositif selon l'une quelconque des revendications 5 à 7, dans lequel lesdits moyens de bras (7) comprennent des moyens de portions télescopiques (8).

9. Dispositif selon l'une quelconque des revendications 5 à 8, dans lequel lesdits moyens de bras (7) supportent de manière réglable une portion d'extrémité de moyens (12) d'écartement de la charge en forme de C.

10. Dispositif selon l'une quelconque des revendications précédentes, dans lequel lesdits moyens (3) de corps de cadre comprenant une autre portion (3') en U.

11. Dispositif selon la revendication 10, dans lequel ladite autre portion (3') en U comprend des moyens d'appui en matériau résistant aux chocs.

12. Dispositif selon l'une quelconque des revendications précédentes, dans lequel lesdits moyens de support de charge comprennent des moyens de console (13') ménagés sur la prolongation de ladite autre portion (3') en U.

13. Dispositif selon la revendication 12, dans lequel lesdits moyens de console (13') et ladite autre portion (3') en U sont agencés de manière à former un autre angle obtus (G).

14. Dispositif selon la revendication 12 ou 13, dans lequel lesdits moyens de console (13') reçoivent des moyens de râtelier porte-objets (14).

15. Dispositif selon l'une quelconque des revendications 12 à 14, dans lequel lesdits moyens de console (13') s'étendent sur des moyens de charge (27) en L, comprenant un moyen de barre verticale (28a) et un moyen de barre horizontale (28b) reliés l'un à l'autre de manière angulaire.

16. Dispositif selon la revendication 15, dans lequel ledit moyen de barre horizontale (28b) reçoit des éléments profilés (29), disposés transversalement par rapport audit moyen de barre horizontale (28b).

17. Dispositif selon l'une quelconque des revendications précédentes, dans lequel lesdits moyens de fixation (19) sont interposés entre lesdits moyens d'ancrage (16) et lesdits deuxièmes moyens (3) de corps de cadre.

18. Dispositif selon l'une quelconque des revendications précédentes, dans lequel lesdits moyens de fixation (19) sont choisis dans un groupe se composant de : éléments de raccord flexibles, élément de raccord non flexibles, sangles, tiges de raccordement vissées, treuils, cliquets, sangles crantées.

19. Dispositif selon l'une quelconque des revendications précédentes, dans lequel lesdits moyens de fixation (19) comprennent une sangle (30) présentant des trous (30") dans lesquels s'engagent les dents d'une roue dentée (29) que l'on peut faire tourner au moyen d'une vis opératoire (26).

20. Dispositif selon l'une quelconque des revendications 12 à 19, dans lequel une portion incurvée (13) est comprise entre lesdits moyens de console (13') et chaque extrémité de ladite autre portion (3') en U.
